# EUROPEAN PATENT SPECIFICATION

(11) **EP 2 426 235 B1**
(45) Date of publication and mention of the grant of the patent: **05.07.2017**
(21) Application number: 11179721.3
(22) Date of filing: 01.09.2011
(51) Int. Cl.: C25B 1/00, C25B 9/08

(54) **Electrochemical process and cell for the preparation of germane**
Elektrochemisches Verfahren und Zelle für die Herstellung von Monogerman
Procédure et cellule électrochimique pour la production de tétrahydrure de germanium

(30) Priority: 02.09.2010 US 874503
(43) Date of publication of application: 07.03.2012
(73) Proprietor: Air Products and Chemicals, Inc., Allentown, PA 18195-1501 (US)
(72) Inventor: Jambunathan, Krishnakumar, Breinigsville, PA Pennsylvania 18031 (US); Berger, Kerry Renard, Lehighton, PA Pennsylvania 18235 (US); Machado, Reinaldo Mario, Allentown, PA Pennsylvania 18104 (US); Ragsdale, Daniel James, Allentown, PA Pennsylvania 18104 (US)
(74) Representative: Beck Greener

(56) References cited:
- WO-A2-2005/005673
- US-A- 4 178 224
- US-A- 5 425 857
- US-A1- 2009 159 454
- V. V. TURYGIN ET AL: "Electrochemical preparation of germane", INORGANIC MATERIALS, vol. 44, no. 10, 11 October 2008 (2008-10-11), pages 1081-1085, XP055159031, ISSN: 0020-1685, DOI: 10.1134/S0020168508100105

## Description

The present invention relates to electrode materials for the electrochemical synthesis of germane (GeH₄). Several electrode materials have been previously reported in literature, which include Ni, Cu, Pb, Sn, Cd, Zn, Pt, Al, Ge, Graphite, Fe and Hg.

SU1732697A1, RU2071993 and RU2230830 taught the use of a Ni electrode to electrochemically generate germane with current efficiencies estimated at 15-20 % when operating at optimal conditions in a flow-through cell with cross mixing of anolyte and catholyte. The patents focused on the process of cross-mixing the anode and cathode electrolytes and not on the electrode material itself.

US 5,158,656 alleged the use of a germanium electrode to generate germane at current efficiencies of 30%. However, this result is in contrast to that reported in a journal publication (Green et al., J. Electrochem. Soc., v106, n3, p253) which showed that germanium electrodes do not generate germane efficiently.

Djurkovic et.al. (Glanik Hem. Drustva, Beograd, v25/26 (8-10), 1961, p469) studied several different metals (Al, Fe, Pb, Cu, Zn and Hg) as electrodes.

Tomilov et al. (Inorganic Materials, 2008, v44, n10, p1081) evaluated several different metals as electrodes in a filter-press electrolyzer with the catholyte circulated by a centrifugal pump and concluded that copper and cadmium were optimal electrode materials with current efficiencies of 32-34 %. The authors also reported that the current efficiencies decreased over a period of time due to the deposition of germanium on the electrode surface.

Thus, there is still a need in the art to provide effective means for the electrochemical synthesis of germane, especially with stable performance. According to the present invention, the method for generating germane in a divided tubular housing electrochemical cell comprises the steps of:
providing a cathode chamber comprising a metal alloy cathode, wherein the metal alloy is a copper alloy comprising >60 wt% copper, and lead, and the cathode gas outlet;
providing an anode chamber comprising an anode that is part of inner wall of the tubular housing comprising metal M₁, and an anode gas outlet;
providing an aqueous electrolyte solution comprising Germanium dioxide (GeO₂), a hydroxide M₂OH and an electrolyte solvent in the cathode chamber and the anode chamber; wherein the metal alloy cathode and the anode are at least partially immersed in the aqueous electrolyte solution;
providing a divider separating the cathode chamber from the anode chamber;
wherein the divider is electrically insulated from anode and cathode circuits;
supplying an electric power to the divided electrochemical cell;
releasing gas generated in the cathode chamber through the cathode gas outlet as the hydride gas; and
releasing gas generated in the anode chamber through the anode gas outlet.

In an embodiment, a method for generating germane in a divided tubular housing electrochemical cell comprises the steps of:
providing a cathode chamber comprising a metal alloy cathode wherein the metal alloy is a copper alloy comprising > 60 wt% copper, and lead,
providing an anode chamber comprising an anode that is part of inner wall of the tubular housing comprising nickel, and an anode gas outlet;
providing an aqueous electrolyte solution comprising Germanium dioxide (GeO₂), KOH and DI water in the cathode chamber and the anode chamber; wherein the metal alloy cathode and the anode are at least partially immersed in the aqueous electrolyte solution;
providing a divider separating the cathode chamber from the anode chamber;
wherein the divider is electrically insulated from anode and cathode circuits;
supplying an electric power to the divided electrochemical cell;
releasing gas generated in the cathode chamber through the cathode gas outlet as the hydride gas; and
releasing gas generated in the anode chamber through the anode gas outlet.

In yet another embodiment, a method for generating germane in a divided tubular housing electrochemical cell comprises the steps of:
providing a cathode chamber comprising the copper alloy cathode, and the cathode gas outlet;
providing an anode chamber comprising an anode that is part of inner wall of the tubular housing comprising nickel, and an anode gas outlet;
providing an aqueous electrolyte solution comprising germanium dioxide (GeO₂) ranging from 60-150 g/l, KOH ranging from 80 to 170 g/l and DI water in the cathode chamber and the anode chamber; wherein the copper alloy cathode and the anode are at least partially immersed in the aqueous electrolyte solution;
providing a divider separating the cathode chamber from the anode chamber;
wherein the divider is electrically insulated from anode and cathode circuits;
supplying an electric power to the divided electrochemical cell;
releasing gas generated in the cathode chamber through the cathode gas outlet as the hydride gas; and
releasing gas generated in the anode chamber through the anode gas outlet.

Preferably, the divider extends at least partially into the aqueous electrolyte solution to prevent mixing of the anode gas with the cathode gas. The divider is preferably tubular. Suitably, the divider comprises an impermeable partition or a combination of an impermeable partition and a porous diaphragm. The porous size in the porous diaphragm is preferably smaller than the gas bubbles generated in the anode chamber and the cathode chamber to prevent mixing of the gas bubbles. The porous diaphragm may continue to the bottom of the divided electrochemical cell.

Preferably, the electrolyte solvent is selected from the group consisting of de-ionized (DI) water, distilled water, deuterated water (D₂O), and mixtures thereof.

The methods optionally further comprise steps for maintaining the cell performance or restoring the cell performance after a reduction in current efficiency over time, by removing the cathode from the aqueous electrolyte solution and polishing the cathode, or suspending the cathode in gas phase over the aqueous electrolyte solution; and reinserting the cathode back to the aqueous electrolyte solution. Where the cathode is suspended in gas phase, the gas phase preferably comprises helium.

The methods optionally further comprise steps for the analysis of the electrolyte, such as obtaining the concentration of GeO₂ and the concentration of hydroxide by a titration-based method. The invention provides:
#1. A method for generating germane in a divided tubular housing electrochemical cell; comprising the steps of:
   providing a cathode chamber comprising a metal alloy cathode wherein the metal alloy is a copper alloy comprising >60 wt% copper, and lead, and the cathode gas outlet;
   providing an anode chamber comprising an anode that is part of inner wall of the tubular housing comprising metal M₁, and an anode gas outlet;
   providing an aqueous electrolyte solution comprising germanium dioxide (GeO₂), a hydroxide M₂OH and an electrolyte solvent in the cathode chamber and the anode chamber; wherein the metal alloy cathode and the anode are at least partially immersed in the aqueous electrolyte solution;
   providing a divider separating the cathode chamber from the anode chamber;
   wherein the divider is electrically insulated from anode and cathode circuits;
   supplying an electric power to the divided electrochemical cell;
   releasing gas generated in the cathode chamber through the cathode gas outlet as the hydride gas; and
   releasing gas generated in the anode chamber through the anode gas outlet.
#2. The method of #1, wherein the metal alloy is selected from the group consisting of copper alloy, tin alloy and combinations thereof; M₁ is a metal or a metal alloy suitable for anodic oxygen generation selected from the group consisting of nickel, platinum, copper, and combinations thereof; and the M₂OH is selected from the group consisting of KOH, NaOH, LiOH, CsOH, and combinations thereof.
#3. The method of #1, wherein the metal alloy is a copper alloy comprising >60% copper (Cu), and lead(Pb).
#4. The method of #3, wherein the copper alloy further comprising tin(Sn) and zinc (Zn); and Zn is < 15%.
#5. The method of #1 wherein the electrolyte solvent is selected from the group consisting of de-ionized(DI) water, deuterated water (D₂O), and mixtures thereof.
#6. The method of #1, wherein GeO₂ in the aqueous electrolyte solution ranges about 30 to 150 g/l, and M₂OH in the aqueous electrolyte solution ranges about 50 to 350 g/l.
#7. The method of #6, wherein concentrations of GeO₂ and M₂OH are determined by a titration method.
#8. The method of #1, wherein the divided tubular housing electrochemical cell is operated at a temperature ranging from 25°C to 90°C, and at a current density ranging from 250 mA/cm² to 350 mA/cm².
#9. The method of #1, wherein the metal alloy cathode is a hollow cathode or a metal alloy cathode comprising a plurality of perforations.
#10. The method of #1, further comprising steps of :
   removing the cathode from the aqueous electrolyte solution and polishing the cathode; or suspending the cathode in gas phase over the aqueous electrolyte solution; and
   reinserting the cathode back to the aqueous electrolyte solution.
#11. A method for generating germane in a divided tubular housing electrochemical cell; comprising the steps of:
   providing a cathode chamber comprising a metal alloy cathode wherein the metal alloy is a copper alloy comprising > 60 wt% copper, and lead, and the cathode gas outlet;
   providing an anode chamber comprising an anode that is part of inner wall of the tubular housing comprising nickel, and an anode gas outlet;
   providing an aqueous electrolyte solution comprising germanium dioxide (GeO₂), KOH and DI water in the cathode chamber and the anode chamber; wherein the metal alloy cathode and the anode are at least partially immersed in the aqueous electrolyte solution;
   providing a divider separating the cathode chamber from the anode chamber;
   wherein the divider is electrically insulated from anode and cathode circuits;
   supplying an electric power to the divided electrochemical cell;
   releasing gas generated in the cathode chamber through the cathode gas outlet as the hydride gas; and
   releasing gas generated in the anode chamber through the anode gas outlet.
#12. The method of #11, wherein the metal alloy is a copper alloy comprising >60% copper (Cu), and lead(Pb).
#13. The method of #12, wherein the copper alloy further comprising tin(Sn) and zinc (Zn); and Zn is < 15%.,
#14. The method of #11, wherein GeO₂ in the aqueous electrolyte solution ranges about 30 to 150 g/l, and KOH in the aqueous electrolyte solution ranges about 50 to 350 g/l.
#15. The method of #14, wherein concentrations of GeO₂ and KOH are determined by a titration method.
#16. The method of #11, wherein the divided tubular housing electrochemical cell is operated at a temperature ranging from 25°C to 90°C, and at a current density range of 250 mA/cm² to 350 mA/cm².
#17. The method of #11, further comprising steps of :
   removing the cathode from the aqueous electrolyte solution and polishing the cathode, or suspending the cathode in gas phase over the aqueous electrolyte solution; and
   reinserting the cathode back to the aqueous electrolyte solution.
#18. A method for generating germane in a divided tubular housing electrochemical cell; comprising the steps of:
   providing a cathode chamber comprising a copper alloy cathode, the copper alloy comprising > 60 wt% copper, and lead, and the cathode gas outlet;
   providing an anode chamber comprising an anode that is part of inner wall of the tubular housing comprising nickel, and an anode gas outlet;
   providing an aqueous electrolyte solution comprising germanium dioxide (GeO₂) ranging from 80 to 170 g/l, KOH ranging from 60-150 g/l and DI water in the cathode chamber and the anode chamber; wherein the copper alloy cathode and the anode are at least partially immersed in the aqueous electrolyte solution;
   providing a divider separating the cathode chamber from the anode chamber;
   wherein the divider is electrically insulated from anode and cathode circuits;
   supplying an electric power to the divided electrochemical cell;
   releasing gas generated in the cathode chamber through the cathode gas outlet as the hydride gas; and
   releasing gas generated in the anode chamber through the anode gas outlet.
#19. The method of #18, wherein
   the copper alloy cathode comprising 81 % Cu, 12% Pb and about 7 % Sn;
   the aqueous electrolyte solution comprising 145 g/l KOH, 100g/l GeO₂ and DI water; and the divided tubular housing electrochemical cell is operated at 30°C; and at a current density of 330 mA/ cm².
#20. The method of #18, further comprising steps of :
   removing the cathode from the aqueous electrolyte solution and polishing the cathode, or suspending the cathode in gas phase over the aqueous electrolyte solution; and
   reinserting the cathode back to the aqueous electrolyte solution.

Features described in connection with one aspect of the invention can be used in connections with any aspect of the invention.

In the drawings:
Figure 1 shows a solubility curve for GeO₂ in aqueous KOH solution showing regions of preferred electrolyte concentrations for obtaining higher GeH₄ current efficiency.
Figure 2 shows a divided electrochemical cell with "tube-in-tube" configuration. A solid partition adjoining a porous diaphragm divides the electrochemical cell.

A new electrode material for the electrochemical synthesis of germane is disclosed herein.

More specifically, the present invention discloses the use of an alloy electrode for the manufacture of germane. In the Examples, this has been shown to result in an increase in the current efficiency for the formation of germane from an electrochemical cell by almost 20 % with minimal or no accumulation of germanium deposits on the electrode surface.

A titration-based method for the analysis of the electrolyte is also disclosed herein.

The electrochemical germane cell used in the present invention, including an electrolyte, a cathode for generating GeH₄ and an anode electrode, is preferably similar to the divided electrochemical cell described in US patent application 20090159454A1 (Machado et al.).

In a preferred embodiment, the electrochemical cell is divided into an anode chamber and a cathode chamber by a solid partition in combination with a porous diaphragm so that the O₂ gas generated at the anode and the hydride gas generated at the cathode do not mix. The gases exit via independent outlets in the gas phase of their respective chambers.

The method of operation involves controlling the differential pressure and differential level between the two chambers using a control value on the cathode gas outlet and / or anode gas outlet.

The electrochemical cell can be operated with the electrolyte continuously or periodically fed to the cathode chamber and drained from the anode chamber or vice versa. The electrochemical cell can also be operated with the anolyte and/or the catholyte fed to their respective chambers, either continuously or periodically as needed.

Germane (GeH₄) is synthesized by the electrolysis of germanium dioxide (GeO₂) dissolved in M²OH containing aqueous solutions using an electrode, where M²OH is preferably selected from the group consisting of KOH, NaOH, LiOH, CsOH, and combinations thereof. In one embodiment, the electrolyte consists of GeO₂ and KOH dissolved in de-ionized water. The term "deionized water" as used herein includes distilled water and water which has been subjected to an ion exchange process. KOH is present to increase the conductivity of the electrolyte and to facilitate the dissolution of GeO₂ in water. A person skilled in the art would know that other types of water, such as deuterated water, can also be used.

The KOH concentration is preferably in the range of 50 to 350 g/L and more preferably in the range of 80 to 170 g/L. The GeO₂ concentration is in the range of 30-150 g/L and more preferably in the range of 60-150 g/L. In solutions containing higher GeO₂ concentrations, KOH concentration may have to be higher because KOH increases the solubility of GeO₂.

As an example, the KOH concentration is 95 g/L and GeO₂ concentration is 60 g/L, or the KOH concentration is 145 g/L and GeO₂ concentration is 100 g/L.

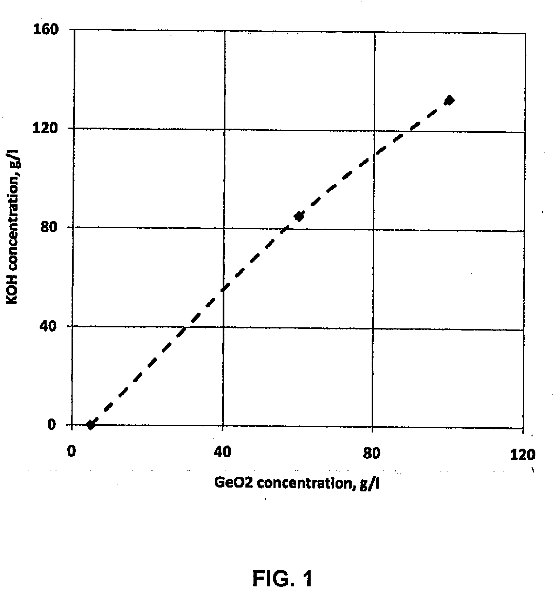

Figure 1 shows the solubility curve for GeO₂ in aqueous KOH solution. Figure 1 indicates the preferred electrolyte concentrations for obtaining higher GeH₄ current efficiency.

It is preferable to have a minimal possible KOH concentration in the electrolyte for a certain GeO₂ concentration to achieve higher current efficiency. However, the optimal electrolyte concentration for germane manufacture by electrolysis may also depend upon the conductivity of the electrolyte (which contributes to the energy required to produce germane), the sustainability of the cell performance and process yields.

The anode material in the electrochemical germane cell is made up of materials such as Platinum, Copper or Nickel. In one embodiment, the wall of the electrochemical cell is made up of nickel which also acts as the anode at which oxygen is evolved from the electrolysis of water.

The cathode in the electrochemical cell is responsible for generating a gas mixture of GeH₄ and H₂. Several metal cathodes used for the generation of germane have been previously reported in literature, which include Ni, Cu, Pb, Sn, Cd, Zn, Th, Pt, Al, Fe and Hg. The use of Graphite and doped Ge as cathodes has also been reported. These different electrode materials have been shown to yield different amounts of GeH₄ in the product gas depending on the operating conditions as well as the relative activity of the electrode materials towards the formation of H₂ and the deposition and accumulation of germanium.

In the present invention, the cathode comprising a copper alloy comprising > 60 wt %, and lead. The different elements in this alloy electrode may provide a synergistic benefit by increasing the formation of germane and decreasing the formation of H₂. Examples for copper alloys include but are not limited to the commercial available copper alloys from McMaster-Carr, such as, a bronze 936 alloy containing about 81 % Cu, 12% Pb and about 7 % Sn; a bronze 544 alloy containing about 89 % Cu, 3 % Zn, 4% Pb and 4% Sn; a bronze 932 alloy containing about 83% Cu, 3% Zn, 7% Pb, 7% Sn; and a bronze alloy 510 containing about 94% Cu, 5% Sn. Here the percentages are in wt%. Both Cu and Pb are present in the alloy electrode to achieve high current efficiencies.

The cathode can be made from a solid piece or from a hollow piece of the alloy. The electrodes can also have a plurality of perforations, e.g. the electrode may have a porous structure with holes drilled through and/or may have patterns on the surface. The cathode can be cooled by making the cathode hollow and having a heat transfer fluid flow inside the hollow cathode via tubes.

At temperatures below 25 °C, the current efficiency of GeH₄ decreases. The electrochemical cell consisting of the electrode material of the present invention is preferably operated in the temperature range of 25-90 ° C, and it is particularly preferable to operate the cell between 25 and 65 °C.

In some embodiments, it is more preferable to operate the cell between 25 and 45 °C to prevent the formation of germanium deposits at temperatures above 45 °C while in other embodiments the electrochemical cell is operated at 60 °C without any formation of germanium deposits.

The optimal operating conditions that correspond to high GeH₄ current efficiency and minimal to no formation of germanium deposits will depend upon the alloy electrode chosen, the electrolyte concentration and operating current density.

The electrochemical cell is preferably operated at current densities in the range of 50 to 500 mA cm⁻², more preferably in the range of 250 to 350 mA cm⁻². At higher current densities, the current efficiency for germane was found to decrease. At lower current densities, the production rate is lowered due to lower applied current and a larger surface area will be required to achieve the target production.

The electrochemical cell is preferably operated in a batch mode for several hours. The raw materials, GeO₂ and water, can be added periodically to the cell. The amount of water required can be based on a level indicator.

Formation of germanium deposits is detrimental for three reasons: 1) germanium deposits can act as an electrode poison, reducing the GeH₄ current efficiency; 2) Raw material yields will be lower; 3) The germanium deposits could peel off from the electrode surface and form sludge in the electrolyte potentially causing operational problems.

The alloying metals when used individually were found to form germanium deposits, but surprisingly, Cu alloys containing the metals did not form germanium deposits or the deposits were very minimal.

It was observed in experiments relating to the present invention that the current efficiency for GeH₄ in the electrolytic process was not affected after re-start following brief or long term shutdowns when electrolytes contained minimal possible KOH concentrations. However, when higher KOH concentrations were used in order to increase the conductivity of the electrolyte, even though the current efficiency was stable during a continuous run, it was lower following a re-start after a brief or long shutdown. Some solutions that help retrieve the performance or prevent the performance drop in the first place have been identified. It has been found that removing the electrode from the electrolytic cell and polishing it before reinserting it into the cell helps recover the performance. Surprisingly, it has also been found out that suspending the electrode in the gas phase over the electrolyte during a shutdown and reinserting it into the electrolyte when the cell is ready to be run would prevent the drop in performance. In addition, it has been found that using a hollow electrode with holes drilled through instead of a solid electrode would also prevent the performance drop following a re-start after a shutdown.

In order to determine the amount of GeO₂ in the electrolyte, a method based on titration can be used.

The solubility of GeO₂ in water is affected by pH (amount of KOH) in the solution. Decreasing the pH of the solution to between 9 and 10 with the addition of an acid such as HCl to the electrolyte solution will result in the precipitation of GeO₂. The solution can then be filtered, the weight of GeO₂ obtained and concentration of GeO₂ (g/L) can be calculated. The concentration of KOH can also be obtained by the titration method. Thus, this titration procedure can be used to determine the amount of GeO₂ in the electrolyte without the need for more expensive and tedious analytical techniques.

### Apparatus

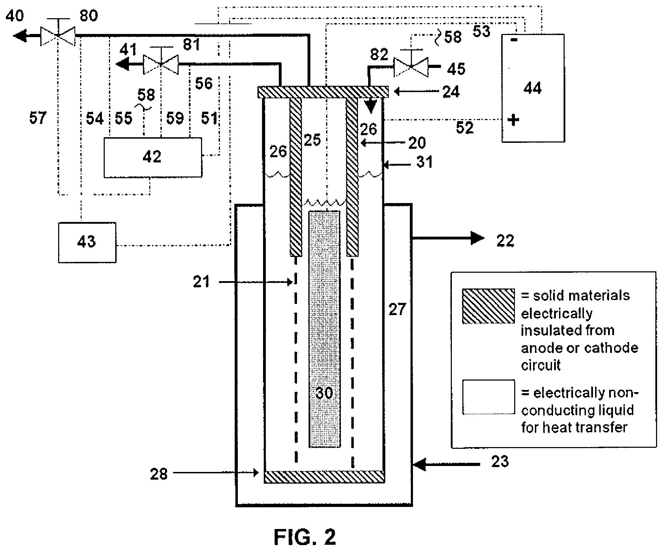

The apparatus used in the working examples is shown in Fig. 2. This arrangement is similar to that shown in Fig. 3 of US patent application 20090159454A1 and described therein.

Fig. 2 shows a divided electrochemical cell with a "tube in a tube" structure designed with a combined solid (impermeable) partition 20 and porous/permeable diaphragm 21: the combined partitions 20 and 21 divide the electrochemical cell into an anode chamber 26 and a cathode chamber 25. The partition 20 extends into the aqueous electrolyte where it adjoins to a porous/liquid permeable diaphragm 21. The holes in the diaphragm are sufficiently small that oxygen and gas bubbles cannot pass through the diaphragm, which allows liquid to flow but inhibits gas bubble passage. This diaphragm may continue to the bottom of the divided electrochemical cell so that the only liquid communication between the anode and cathode chamber is through the holes in the diaphragm. The gases evolved at the anode and cathodes do not mix but rise via buoyancy forces into the gas "head-space" regions of their respective chambers (the top portions of chambers 26 and 25). The gases are allowed to exit out of these "head-space" regions through gas outlets 40 and 41. Make-up water can be added continuously or batch-wise via inlet 45. Continuous liquid communication between the anode chamber and cathode chamber (26 and 25) through the diaphragm 21 is necessary to allow the flow of ions between the chambers.

The cathode 30 may be supported by base 28, or suspended from lid 24.

A number of configurations for process control are possible.
1. The differential transducer/controller 42 can be programmed to turn-off the electrical current from the power supply 44 using control signal 51 when a unique programmed differential pressure set point measured between the differential pressure input signals from the anode chamber and cathode chamber 55, and 56, is reached.
2. An emergency shutdown is also possible if the overall pressure measured from pressure input 54 to the high pressure transducer/controller 43 exceeds a preprogrammed pressure. A signal from 43 goes via a high pressure alarm control signal to the power supply 44 to shut down power.
3. An alternative control scheme controls the cathode and/or anode control valves 80 and 81 should the differential pressure between 55 and 56 exceeds a control set-point.

Temperature control of the divided electrochemical cell can be achieved through a jacket 27 around the divided electrochemical cell by using a conventional source of cooling fluid (electrically non-conducting fluid) through inlet 23 which exits the jacket through outlet 22.

It is particularly advantageous when the anode 31 is also part of the divided electrochemical cell housing 31. Nickel is an acceptable material of construction for 31, when aqueous alkali hydroxide electrolytes are used. Composite divided electrochemical cell of plastic such as high density polyethylene with a thin nickel electrode is also acceptable.

Reference numbers used in Fig. 2 are as follows:
20 = solid partition separating the anode chamber and cathode chamber which is electrically insulated from the anode or cathode circuit. It may be made of an insulating material such as high density polyethylene or a metal such as stainless steel provided it is insulated from the anode and cathode circuit
21 = electrically nonconducting permeable diaphragm
22 = cooling fluid outlet from the divided electrochemical cell jacket
23 = cooling fluid inlet to the divided electrochemical cell jacket
24 = solid lid with openings for the anode and cathode gases and it is electrically insulated from the anode and cathode circuit
25 = cathode chamber
26 = anode chamber
27 = heat transfer jacket (electrically non-conducting fluid)
28 = electrical insulator on bottom of the divided electrochemical cell to inhibit the formation of oxygen from the bottom of the divided electrochemical cell
30 = cathode electrode
31 = divided electrochemical cell housing which also serves as the anode
40 = cathode gas outlet from the cathode chamber
41 = anode gas outlet from the anode chamber
42 = differential pressure transducers/controller
43 = high pressure transducer/switch
44 = electrical power supply
45 = water feed inlet
51 = differential pressure control signal to power supply
52 = anode power connection
53 = cathode power connection
54 = high pressure input
55 = differential pressure input from cathode chamber
56 = differential pressure input from anode chamber
57= control signal to cathode gas control valve
58= control signal to water control valve
59= control signal to anode gas control valve
80 = cathode gas control/metering valve
81 = anode gas control/metering valve
82 = water control/metering valve.

### Working Examples

The apparatus used in the working example was as described under "Apparatus" above. A cylindrical electrochemical cell 31 made of Nickel (6.0" (15 cm) outer diameter OD) was used to electrochemically generate GeH₄ at the cathode. A cylindrical separator (3" (8 cm) inner diameter ID) 20, 21 was used to divide the electrochemical cell into an anode chamber 26 and a cathode chamber 35 to prevent the cross mixing of the gases generated in the two chambers. The separator consisted of a cylindrical 100 µm pore size diaphragm 21 (a blend of HDPE and HDPP (Genpore)) that was welded to the distal end of a solid HDPE tube 20. The separator extended to the base 28 of the cell. The Ni inner wall of the cylindrical cell 31 acted as the anode at which oxygen gas was evolved from the electrolysis. A control valve 81 on the anode gas outlet 41 was used to control the differential pressure and the level difference between the anode and cathode chambers 25, 26 to further to prevent the cross mixing of the gases generated in the two chambers. A diethylene glycol coolant jacket 27 on the outside of the electrochemical cell was used to maintain the temperature of the cell.

A bronze 936 alloy containing about 81 % Cu, 12% Pb and about 7 % Sn; and a bronze 544 alloy containing about 89 % Cu, 3 % Zn, 4% Pb and 4% Sn; and a bronze 932 alloy containing about 83% Cu, 3% Zn, 7% Pb, 7% Sn; and a bronze alloy 510 containing about 94% Cu, 5% Sn were purchased from McMaster-Carr to be used as the cathode 30 to generate GeH₄.

Examples 1-3 below demonstrate the improvement in performance of an electrochemical germane cell when electrodes of the present invention were used in a cell according to the working example.

### Example 1

The electrolyte contained 145 g/L KOH and 100 g/L GeO₂ dissolved in de-ionized water.

A bronze 936 alloy was used as the cathode to generate GeH₄. The 936 alloy electrode was a 0.25" (0.6 cm) diameter rod with an active surface area of 15 cm².

A current of 5 A corresponding to a current density of 330 mA cm⁻² was applied to the cell. The cell was operated for at least 4 hours and up to 9 hours each day for several days.

The electrolyte temperature was maintained at 30 °C using a diethylene glycol coolant jacket on the outside of the electrochemical cell.

A Piezocon^{®} gas concentration sensor from Lorex Industries, Inc. was used to obtain the concentrations of GeH₄ and H₂ in the product gas. The molar GeH₄ concentration in the product gas was 16.2 % corresponding to a current efficiency of 43.6 %.

The electrolyte was not replenished with the raw materials during the runs.

### Example 2

An experiment similar to the one described in example 1 was carried out, however a bronze alloy 544 was used as the cathode.

The GeH₄ concentration in the product gas was 14.7 % corresponding to a current efficiency of 40.8 %.

### Comparative Example 3

An experiment similar to the one described in example 1 was carried out, however copper was used as the cathode.

The GeH₄ concentration in the product gas was 12.6% corresponding to a current efficiency of 36.6 %.

**Table 1. % GeH₄ in the cathode gas and the current efficiency for GeH₄ formation in an aqueous electrolyte containing 145 g/L KOH and 100 g/L GeO₂ at 330 mA cm⁻² and 30 °C.**

| **Example** | **Cathode** | **mol**% **GeH₄** | **GeH₄ current Efficiency (%)** |
|---|---|---|---|
| 1 | 936 | 16.2 | 43.6 |
| 2 | 544 | 14.7 | 40.8 |
| 3 | Cu | 12.6 | 36.6 |

Examples 4-6 below illustrate the effect of current density on GeH₄ concentration in the product gas.

### Example 4

An experiment similar to that described in example 1 was carried out in electrolyte containing 95 g/L KOH and 45 g/L GeO₂ dissolved in de-ionized water at 330 mA cm⁻². Bronze alloy 936 was used as the electrode.

The GeH₄ concentration in the product gas was 10.7 %.

### Example 5

An experiment similar to that described in example 4 was carried out but at a lower current density of 250 mA cm⁻².

The GeH₄ concentration in the product gas was 10.7 %.

### Example 6

An experiment similar to that described in example 4 was carried out but at a higher current density of 500 mA cm⁻².

The GeH₄ concentration in the product gas was 9.5 %.

**Table 2. GeH₄ concentration in the cathode gas during electrolysis in an aqueous electrolyte containing 95 g/L KOH and 45 g/L GeO₂ at current densities between 250-500 mA cm⁻².**

| **Example** | **Current Density, mA cm⁻²** | **mol**% **GeH₄** | **GeH₄ Current Efficiency %** |
|---|---|---|---|
| 4 | 330 | 10.7 | 32.4 |
| 5 | 250 | 10.7 | 32.4 |
| 6 | 500 | 9.1 | 28.6 |

Examples 7-10 below illustrate the effect of KOH and GeO₂ concentrations on % GeH₄ produced using bronze alloy 936 as the cathode.

### Example 7

An experiment similar to that described in example 1 was carried out in electrolyte containing 95 g/L KOH and 60 g/L GeO₂ dissolved in de-ionized water at 330 mA cm⁻². The GeH₄ concentration in the product gas was 12 %.

### Example 8

An experiment similar to that described in example 1 was carried out in electrolyte containing 263 g/L KOH and 60 g/L GeO₂ dissolved in de-ionized water at 330 mA cm⁻². The GeH₄ concentration in the product gas was 5.5 %.

### Example 9

An experiment similar to that described in example 1 was carried out in electrolyte containing 196 g/L KOH and 42 g/L GeO₂ dissolved in de-ionized water at 330 mA cm⁻². The GeH₄ concentration in the product gas was 7.5 %.

### Example 10

An experiment similar to that described in example 1 was carried out in electrolyte containing 196 g/L KOH and 56 g/L GeO₂ dissolved in de-ionized water at 330 mA cm⁻². The GeH₄ concentration in the product gas was 8.1 %.

**Table 3. GeH₄ concentration in the cathode gas during electrolysis in an aqueous electrolyte containing different concentrations of KOH and GeO₂ at a current density of 330 mA cm⁻².**

| **Example** | **KOH, g/L** | **GeO₂, g/L** | **mol% GeH₄** | **GeH₄ Current Efficiency, %** |
|---|---|---|---|---|
| 7 | 95 | 60 | 12 | 35.3 |
| 8 | 263 | 60 | 5.5 | 18.9 |
| 5 | 95 | 45 | 10.7 | 32.4 |
| 10 | 196 | 45 | 7.5 | 24.5 |
| 10 | 196 | 56 | 8.1 | 26.1 |

Examples 11-12 below illustrated the effect of temperature on the generation of GeH₄ using the bronze alloy 936 as the cathode.

### Example 11

An experiment similar to that described in example 4 was carried out but at a lower temperature of 20 °C. The GeH₄ concentration in the product gas was 6 %.

### Example 12

An experiment similar to that described in example 7 was carried out but at a higher temperature of 45 °C. The GeH₄ concentration in the product gas was 12.3 %.

**Table 4. GeH₄ concentration in the cathode gas during electrolysis in an aqueous electrolyte containing KOH and GeO₂ at a current density of 330 mA cm⁻² and at different temperatures.**

| **Example** | **KOH, g/L** | **GeO₂, g/L** | **Temperature, °C** | **mol% GeH₄** | **GeH₄ Current Efficiency, %** |
|---|---|---|---|---|---|
| 4 | 95 | 45 | 30 | 10.7 | 32.4 |
| 11 | 95 | 45 | 20 | 6 | 20.3 |
| 7 | 95 | 60 | 30 | 12 | 35.3 |
| 12 | 95 | 60 | 45 | 12.3 | 35.9 |

Examples 13-20 below illustrated the performance of different metals and alloys as electrodes to generate GeH₄.

### Example 13

An experiment similar to that described in example 1 was carried out in electrolyte containing 196 g/L KOH and 45 g/L GeO₂ dissolved in de-ionized water. Alloy 936 was used as the cathode. A current of 5 A was applied to the cell and the GeH₄ concentration in the product gas was 7.2 % at 30 °C. There was no formation of germanium deposits on the electrode surface.

### Example 14

An experiment similar to that described in example 13 was carried out with bronze alloy 932 as the cathode. The GeH₄ concentration was 4.1 % at 30 °C and 7 % at 60 °C. There was no formation of germanium deposits on the electrode surface.

### Comparative Example 15

An experiment similar to that described in example 13 was carried out with Sn as the cathode. The GeH₄ concentration was 9.8 %. However, a significant amount of germanium deposits were formed on the electrode surface.

### Comparative Example 16

An experiment similar to that described in example 13 was carried out with Pb as the cathode. The GeH₄ concentration in the product gas was 1.9 % at 30 °C and 60 °C. A significant amount of germanium deposits were formed on the electrode surface.

### Comparative Example 17

An experiment similar to that described in example 13 was carried out with Cu as the cathode. The GeH₄ concentration in the product gas was 8.5 % at 30 °C. There was no formation of germanium deposits on the electrode surface.

### Comparative Example 18

An experiment similar to that described in example 13 was carried out with Ni as the cathode. The GeH₄ concentration on was 6.0 % at 30 °C without the formation of significant amounts of germanium deposits.

### Comparative Example 19

An experiment similar to that described in example 13 was carried out with Monel, (∼70% Ni, ∼30% Cu) as the cathode. The GeH₄ concentration was 3.5% at 30 °C and 7 % at 60 °C respectively. A significant amount of germanium deposits was observed on the electrode surface.

### Comparative Example 20

An experiment similar to that described in example 13 was carried out with bronze alloy 510 used as the cathode. The GeH₄ concentration was 3.8% at 30 °C and 6.1 % at 60 °C. A significant amount of germanium deposits was observed on the electrode surface.

**Table 5. GeH₄ concentration in the cathode gas during electrolysis at 330 mA cm⁻² with different metals and alloys as electrodes.**

| **Example** | **Electrode** | **mol% GeH₄** | **GeH₄ Current Efficiency (%)** | **Deposits of Germanium** |
|---|---|---|---|---|
| 13 | 936 | 7 (30 °C) | 23.1 | no |
| 14 | 932 | 4.1 (30 °C) / 7 (60 °C) | 14.6/23.1 | no |
| 15 | Sn | 9.8 (30 °C) | 30.3 | yes |
| 16 | Pb | 1.9 (30 & 60 °C) | 7.2 | yes |
| 17 | Cu | 8.5 (30°C) | 27.1 | no |
| 18 | Ni | 6 (30°C) | 20.3 | no |
| 19 | Monel | 3.5 (30 °C) / 7 (60 °C) | 12.7/23.1 | yes |
| 20 | 510 | 3.8 (30 °C) / 6 (60 °C) | 13.6/20.3 | yes |

Examples 21-26 below illustrate different methods to restore the performance of the GeH₄ electrochemical cell.

### Comparative Example 21

An experiment similar to that described in example 1 was carried out in electrolyte containing 196 g/L KOH and 56 g/L GeO₂ dissolved in de-ionized water. Bronze alloy 936 was used as the cathode. A current of 5 A was applied to the cell. The GeH₄ concentration on day 1 was 8 %. The cell was shutdown overnight and re-started the following day. The GeH₄ concentration on day 2 was 6 %, on day 3 was 4 % and day 4 was 3%.

### Example 22

An experiment similar to that described in comparative example 21 was carried out in electrolyte containing 196 g/L KOH and 56 g/L GeO₂ dissolved in de-ionized water. Bronze alloy 936 was the cathode. After the end of day 4 of experiments, the electrode was taken out of the cell and polished with a polishing cloth, rinsed and re-inserted into the cell. The GeH₄ concentration in the product gas increased to 8 % following polishing.

### Example 23

An experiment similar to that described in example 21 was carried out in electrolyte containing a lower concentration of KOH (95 g/L) and 60 g/L GeO₂ dissolved in de-ionized water. The GeH₄ concentration on day 1 was 8 %. The cell was shutdown overnight and re-started the following day. The GeH₄ concentration on day 2 was 12 % and day 3 was 11 % and on day 4 was 11.4 %.

### Comparative Example 24

An experiment similar to that described in comparative example 21 was carried out in electrolyte containing 185 g/L KOH and 37 g/L GeO₂ dissolved in de-ionized water. There was almost a 50 % decrease in GeH₄ concentration in the product gas on day 2.

### Example 25

An experiment similar to that described in comparative example 24 was carried out in electrolyte containing 185 g/L KOH and 37 g/L GeO₂ dissolved in de-ionized water. Following operation of the cell on day 1, the cell was shutdown and the cell head space was briefly purged with Helium. The electrode was then lifted out of the electrolyte and kept above the electrolyte in the cell until the cell was run the following day. There was only a 4% decrease in GeH₄ concentration in the product gas on day 2.

### Example 26

An experiment similar to that described in comparative example 21 was carried out in electrolyte containing 235 g/L KOH and 71 g/L GeO₂ dissolved in de-ionized water. A 0.5" (1.3 cm) OD and 0.48" (1.2 cm) ID hollow tube of Alloy 936 with 1 mm holes was used as the cathode. A current of 10 A was applied to the cell corresponding to a current density of 330 mA cm⁻². The GeH₄ concentration did not decrease after 3 days of operation.

**Table 6. Comparison of different methods to restore or maintain the performance of the germane electrolytic cell. The table shows GeH₄ concentration (%) on different days following overnight shutdowns.**

| Example | Process | Day 1 | Day 2 | Day 3 | Day 4 | Day 5 |
|---|---|---|---|---|---|---|
| 21 & 22 | Effect of polishing (after day 4) | 8 | 6 | 4 | 3 | 8 |
| 23 | Lower KOH concentration | 8 | 12 | 11 | 11 | - |
| 25 | Electrode above the electrolyte | 8 | 7.7 | 7.7 | - | - |
| 26 | Electrode with holes | 6 | 6 | 6 | - | - |

Example 27 below illustrates the titration method to obtain GeO₂ concentration.

### Example 27

34 cc of 1.2 N HCl aqueous solution was added to 10 cc of aqueous electrolyte solution containing GeO₂ and KOH. The pH of the resulting solution after the addition of the acid was 9.5. The GeO₂ in the solution precipitated out and it was filtered and weighed. Based on the weight of the GeO₂, it was determined that the electrolyte consisted of 103.6 g/L of GeO₂. It was also determined that the electrolyte solution contained 168 g/L KOH after titrating the electrolyte solution to a pH of 7. The concentrations that were determined by titration were almost identical to that obtained using inductively coupled plasma mass spectrometry which showed that the electrolyte contained 103.1 g/L of GeO₂ and 168 g/L KOH.

In summary, a new electrode material for the electrochemical synthesis of germane has been disclosed herein.

Copper rich alloys containing other alloying elements such as Pb, Sn, Zn etc. were found in the examples to be better electrodes compared to metals for the generation of GeH₄ via electrolysis of aqueous solutions containing GeO₂ and KOH. When those copper rich alloys were used in an electrolytic germane cell, germane current efficiencies of over 40 % with stable performance for several hours were achieved.

The highest current efficiency of ∼44 % was observed when 936 alloy (-81 % Cu, 12% Pb and ∼7 % Sn) was used as the electrode in an aqueous electrolyte containing 145 g/L KOH and 100 g/L GeO₂ when operated at 30 °C at a current density of 330 mA cm⁻².

The optimal electrode should not only provide high GeH₄ current efficiencies but also result in minimal formation of germanium deposits. The new alloy electrode(s) of the examples of the present invention has been shown to have high current efficiency for GeH₄ formation in an electrolytic GeH₄ cell with minimal or no formation of germanium deposits on the electrode surface when operated under the preferred conditions.

Comparing with electrodes containing copper and cadmium (Tomilov et. al. Inorganic Materials, 2008, v44, n10, p1081), a 20 % improvement in current efficiency for GeH₄ formation was observed with these new electrodes of alloys of copper.

It was determined that the performance of the electrochemical cell improved significantly when operating at lower KOH concentrations and higher GeO₂ concentrations. Preferred operating conditions for higher GeH₄ current efficiency (temperature, KOH and GeO₂ concentrations, current density) have also been disclosed in present invention.

Furthermore, several different methods to for maintaining the cell performance or restoring the cell performance after a reduction in current efficiency over time were identified.

A titration-based method for the analysis of the electrolyte, such as to obtain the concentration of GeO₂ and KOH has also been disclosed.

The foregoing examples and description of the embodiments should be taken as illustrating, rather than as limiting the present invention as defined by the claims. As will be readily appreciated, numerous variations and combinations of the features set forth above can be utilized without departing from the present invention as set forth in the claims.

## Claims

1. A method for generating germane in a divided tubular housing electrochemical cell, comprising the steps of:
providing a cathode chamber (25) comprising a metal alloy cathode (30) wherein the metal alloy is a copper alloy comprising >60 wt% copper (Cu), and lead (Pb), and a cathode gas outlet (40);
providing an anode chamber (26) comprising an anode that is part of an inner wall of the tubular housing (31) comprising metal M¹, and an anode gas outlet (41);
providing an aqueous electrolyte solution comprising germanium dioxide (GeO₂), a hydroxide M²OH and an electrolyte solvent in the cathode chamber (25) and the anode chamber (26), wherein the metal alloy cathode (30) and the anode (31) are at least partially immersed in the aqueous electrolyte solution;
providing a divider (20, 21) separating the cathode chamber (25) from the anode chamber (26); wherein the divider (20, 21) is electrically insulated from anode and cathode circuits;
supplying electric power to the divided electrochemical cell;
releasing gas generated in the cathode chamber (25) through the cathode gas outlet (40) as hydride gas; and
releasing gas generated in the anode chamber (26) through the anode gas outlet (14).

2. The method of Claim 1, wherein M¹ is a metal or a metal alloy suitable for anodic oxygen generation selected from the group consisting of nickel, platinum, copper, and combinations thereof; and/or M²OH is selected from the group consisting of KOH, NaOH, LiOH, CsOH, and combinations thereof.

3. The method of claim 2, wherein the copper alloy further comprises tin (Sn) and optionally zinc (Zn); and Zn is present in an amount of < 15 wt%.

4. The method of any one of the preceding claims, wherein the concentration of GeO₂ in the aqueous electrolyte solution is in the range of 30 to 150 g/L, and/or the concentration of M²OH in the aqueous electrolyte solution is in the range of 50 to 350 g/L.

5. The method of any one of the preceding claims, further comprising a step of titration to determine the concentrations of GeO₂ and/or M²OH in the aqueous electrolyte solvent.

6. The method of any one of the preceding claims, wherein the divided tubular housing electrochemical cell is operated at a temperature in the range of 25 °C to 90 °C, and/or at a current density in the range of 250 mA/cm² to 350 mA/cm².

7. The method of any one of the preceding claims, wherein the metal alloy cathode (30) is a hollow cathode or a metal alloy cathode comprising a plurality of perforations.

8. The method of any one of the preceding claims, further comprising steps of:
removing the cathode (30) from the aqueous electrolyte solution and polishing the cathode (30); and/or suspending the cathode (30) in gas phase over the aqueous electrolyte solution; and
reinserting the cathode (30) back to the aqueous electrolyte solution.

9. A method as claimed in any one of the preceding claims, wherein M¹ is nickel, M²OH is KOH and the electrolyte solvent is DI water.

10. A method as claimed in claim 9, wherein the concentration of germanium dioxide (GeO₂) is in the range of 60 to 150 g/L, and the concentration of KOH is in the range of 80 to 170 g/L.

11. The method of Claim 10, wherein
the copper alloy cathode comprises 81 wt% Cu, 12 wt% Pb and 7 wt% Sn;
the aqueous electrolyte solution comprises 145 g/L KOH, 100 g/L GeO₂ and DI water; and the divided tubular housing electrochemical cell is operated at a temperature of 30 °C; and at a current density of 330 mA/ cm².

12. A divided tubular housing electrochemical cell apparatus for use in the method of any one of the preceding claims, comprising:
a cathode chamber (25) comprising a copper alloy cathode (30) of >60 wt% copper (Cu) and lead (Pb), and a cathode gas outlet (40);
an anode chamber (27) comprising an anode that is part of an inner wall of the tubular housing (31) comprising metal M¹, and an anode gas outlet (41); and
a divider (20, 21) separating the cathode chamber (25) from the anode chamber (26); wherein the divider (20, 21) is electrically insulated from anode and cathode circuits.

13. Use of a copper alloy comprising >60 wt% copper (Cu) and lead (Pb) as a cathode (30) in a divided tubular housing electrochemical cell apparatus for generating germane to increase current efficiency and/or inhibit formation of germanium deposits.

14. Use of KOH having a concentration in the range of 80 to 170 g/L in an aqueous electrolyte solution also comprising germanium dioxide (GeO₂) to improve current efficiency on re-start after a shutdown in generating germane in a divided tubular housing electrochemical cell according to claim 12.

## Patentansprüche

1. Verfahren zum Erzeugen von Monogerman in einer unterteilten elektrochemischen Zelle mit röhrenförmigem Gehäuse, wobei das Verfahren die folgenden Schritte umfasst:
Bereitstellen von einer Kathodenkammer (25), umfassend eine Metalllegierungskathode (30), wobei die Metalllegierung eine Kupferlegierung ist, die >60 Gew.-% Kupfer (Cu) und Blei (Pb) umfasst, und einen Kathodengasauslass (40);
Bereitstellen von einer Anodenkammer (26), umfassend eine Anode, welche Teil von einer inneren Wand des röhrenförmigen Gehäuses (31) ist und ein Metall M¹ umfasst, und einen Anodengasauslass (41);
Bereitstellen von einer wässerigen Elektrolytlösung, welche Germaniumdioxid (GeO₂), ein Hydroxid M²OH und ein Elektrolytlösungsmittel umfasst, in der Kathodenkammer (25) und der Anodenkammer (26), wobei die Metalllegierungskathode (30) und die Anode (31) zumindest teilweise in die wässerige Elektrolytlösung eingetaucht sind;
Bereitstellen von einem Teiler (20, 21), welcher die Kathodenkammer (25) von der Anodenkammer (26) trennt; wobei der Teiler (20, 21) elektrisch von den Anoden- und Kathodenkreisläufen isoliert ist;
Zuführen von elektrischer Energie zu der unterteilten elektrochemischen Zelle;
Freisetzen von Gas, welches in der Kathodenkammer (25) erzeugt wird, als Hydridgas durch den Kathodenauslass (40); und
Freisetzen von Gas, welches in der Anodenkammer (26) erzeugt wird, durch den Anodengasauslass (14).

2. Verfahren nach Anspruch 1, wobei das M¹ ein Metall oder eine Metalllegierung ist, welches/welche für eine anodische Sauerstofferzeugung geeignet und aus der Gruppe ausgewählt ist, bestehend aus Nickel, Platin, Kupfer und Kombinationen daraus; und/oder M²OH ist, welches aus der Gruppe ausgewählt ist, bestehend aus KOH, NaOH, LiOH, CsOH und Kombinationen daraus.

3. Verfahren nach Anspruch 2, wobei die Kupferlegierung ferner Zinn (Sn) und optional Zink (Zn) umfasst; und Zn mit einer Menge von <15 Gew.-% vorliegt.

4. Verfahren nach einem der vorhergehenden Ansprüche, wobei die Konzentration von GeO₂ in der wässerigen Elektrolytlösung in dem Bereich von 30 bis 150 g/l liegt und/oder die Konzentration von M²OH in der wässerigen Elektrolytlösung in dem Bereich von 50 bis 350 g/l liegt.

5. Verfahren nach einem der vorhergehenden Ansprüche, ferner umfassend einen Schritt der Titration, um die Konzentrationen von GeO₂ und/oder M²OH in dem wässerigen Elektrolytlösungsmittel zu bestimmen.

6. Verfahren nach einem der vorhergehenden Ansprüche, wobei die unterteilte elektrochemische Zelle mit röhrenförmigem Gehäuse bei einer Temperatur in dem Bereich von 25 °C bis 90 °C und/oder bei einer Stromdichte in dem Bereich von 250 mA/cm² bis 350 mA/cm² betrieben wird.

7. Verfahren nach einem der vorhergehenden Ansprüche, wobei die Metalllegierungskathode (30) eine hohle Kathode oder eine Metalllegierungskathode ist, die eine Vielzahl von Performationen aufweist.

8. Verfahren nach einem der vorhergehenden Ansprüche, ferner umfassend die folgenden Schritte:
Entfernen von der Kathode (30) aus der wässerigen Elektrolytlösung und Polieren von der Kathode (30); und/oder Halten von der Kathode (30) in der Gasphase über der wässerigen Elektrolytlösung; und
Wiedereinführen von der Kathode (30) zurück in die wässerige Elektrolytlösung.

9. Verfahren nach einem der vorhergehenden Ansprüche, wobei M¹ Nickel, M²OH KOH und das Elektrolytlösungsmittel DI-Wasser ist.

10. Verfahren nach Anspruch 9, wobei die Konzentration von Germaniumdioxid (GeO₂) in dem Bereich von 60 bis 150 g/l liegt und die Konzentration von KOH in dem Bereich von 80 bis 170 g/l liegt.

11. Verfahren nach Anspruch 10, wobei
die Kupferlegierungskathode 81 Gew.-% Cu, 12 Gew.-% Pb und 7 Gew.-% Sn umfasst;
die wässerige Elektrolytlösung 145 g/l KOH, 100 g/l GeO₂ und DI-Wasser umfasst; und die unterteilte elektrochemische Zelle mit röhrenförmigem Gehäuse bei einer Temperatur von 30 °C; und einer Stromdichte von 330 mA/cm² betrieben wird.

12. Apparat für eine unterteilte elektrochemische Zelle mit röhrenförmigen Gehäuse zur Verwendung in dem Verfahren nach einem der vorhergehenden Ansprüche, umfassend:
eine Kathodenkammer (25), umfassend eine Metalllegierungskathode (30) aus >60 Gew.-% Kupfer (Cu) und Blei (Pb) und einen Kathodengasauslass (40);
eine Anodenkammer (27), umfassend eine Anode, welche Teil von einer inneren Wand des röhrenförmigen Gehäuses (31) ist und ein Metall M¹ umfasst, und einen Anodengasauslass (41); und
einen Teiler (20, 21), welcher die Kathodenkammer (25) von der Anodenkammer (26) trennt; wobei der Teiler (20, 21) elektrisch von den Anoden- und Kathodenkreisläufen isoliert ist.

13. Verwendung einer Kupferlegierung, welche >60 Gew.-% (Cu) und Blei (Pb) umfasst, als eine Kathode (30) in einem Apparat für eine unterteilte elektrochemische Zelle mit röhrenförmigen Gehäuse zur Erzeugung von Monogerman, um die Stromausbeute zu erhöhen und/oder die Bildung von Germaniumabscheidungen zu unterbinden.

14. Verwendung von KOH, welches eine Konzentration in dem Bereich von 80 bis 170 g/l in einer wässerigen Elektrolytlösung aufweist, die auch Germaniumdioxid (GeO₂) umfasst, um die Stromausbeute bei einem Neustart nach einem Ausschalten bei der Erzeugung von Monogerman in einer unterteilten elektrochemischen Zelle mit röhrenförmigen Gehäuse nach Anspruch 12 zu verbessern.

## Revendications

1. Procédé de génération de germane dans une cellule électrochimique à logement tubulaire divisé, comprenant les étapes suivantes :
la fourniture d'une chambre cathodique (25) comprenant une cathode en alliage métallique (30) dans lequel l'alliage métallique est un alliage de cuivre comprenant > 60 % en poids de cuivre (Cu), et du plomb (Pb), et une sortie de gaz de cathode (40) ;
la fourniture d'une chambre anodique (26) comprenant une anode faisant partie d'une paroi interne du logement tubulaire (31) comprenant un métal M¹, et une sortie de gaz d'anode (41) ;
la fourniture d'une solution aqueuse d'électrolyte comprenant du dioxyde de germanium (GeO₂), un hydroxyde M²OH et un solvant pour électrolyte dans la chambre cathodique (25) et la chambre anodique (26), dans lequel la cathode en alliage métallique (30) et l'anode (31) sont au moins partiellement immergées dans la solution aqueuse d'électrolyte ;
la fourniture d'un diviseur (20, 21) séparant la chambre cathodique (25) de la chambre anodique (26) ; dans lequel le diviseur (20, 21) est électriquement isolé des circuits de l'anode et de la cathode ;
la fourniture d'une puissance électrique à la cellule électrochimique divisée ;
la libération du gaz généré dans la chambre cathodique (25) par la sortie de gaz de cathode (40) sous forme d'hydrure gazeux ; et
la libération du gaz généré dans la chambre anodique (26) par la sortie de gaz d'anode (14).

2. Procédé selon la revendication 1, dans lequel M¹ est un métal ou un alliage métallique approprié pour la génération d'oxygène anodique choisi dans le groupe constitué du nickel, du platine, du cuivre, et de leurs combinaisons ; et/ou M²OH est choisi dans le groupe constitué de KOH, NaOH, LiOH, CsOH, et de leurs combinaisons.

3. Procédé selon la revendication 2, dans lequel l'alliage de cuivre comprend en outre de l'étain (Sn) et facultativement du zinc (Zn) ; et Zn est présent en une quantité < 15 % en poids.

4. Procédé selon l'une quelconque des revendications précédentes, dans lequel la concentration en GeO₂ dans la solution aqueuse d'électrolyte est située dans la plage allant de 30 à 150 g/l, et/ou la concentration en M²OH dans la solution aqueuse d'électrolyte est située dans la plage allant de 50 à 350 g/l.

5. Procédé selon l'une quelconque des revendications précédentes, comprenant en outre une étape de titrage pour déterminer les concentrations en GeO₂ et/ou en M²OH dans le solvant aqueux pour électrolyte.

6. Procédé selon l'une quelconque des revendications précédentes, dans lequel la cellule électrochimique à logement tubulaire divisé fonctionne à une température située dans la plage allant de 25 °C à 90 °C, et/ou à une densité de courant située dans la plage allant de 250 mA/cm² à 350 mA/cm².

7. Procédé selon l'une quelconque des revendications précédentes, dans lequel la cathode en alliage métallique (30) est une cathode creuse ou une cathode en alliage métallique comprenant une pluralité de perforations.

8. Procédé selon l'une quelconque des revendications précédentes, comprenant en outre les étapes suivantes :
le retrait de la cathode (30) de la solution aqueuse d'électrolyte et le polissage de la cathode (30) ; et/ou la suspension de la cathode (30) dans une phase gazeuse au-dessus de la solution aqueuse d'électrolyte ; et
la réinsertion de la cathode (30) dans la solution aqueuse d'électrolyte.

9. Procédé selon l'une quelconque des revendications précédentes, dans lequel M¹ est le nickel, M²OH est KOH et le solvant pour électrolyte est de l'eau déionisée.

10. Procédé selon la revendication 9, dans lequel la concentration en dioxyde de germanium (GeO₂) est située dans la plage allant de 60 à 150 g/l, et la concentration en KOH est située dans la plage allant de 80 à 170 g/l.

11. Procédé selon la revendication 10, dans lequel
la cathode en alliage de cuivre comprend 81 % en poids de Cu, 12 % en poids de Pb et 7 % en poids de Sn ;
la solution aqueuse d'électrolyte comprend 145 g/l de KOH, 100 g/l de GeO₂ et de l'eau déionisée ; et la cellule électrolytique à logement tubulaire divisé fonctionne à une température de 30 °C ; et à une densité de courant de 330 mA/cm².

12. Appareil à cellule électrochimique à logement tubulaire divisé pour son utilisation dans le procédé selon l'une quelconque des revendications précédentes, comprenant :
une chambre cathodique (25) comprenant une cathode en alliage de cuivre (30) contenant > 60 % en poids de cuivre (Cu) et du plomb (Pb), et une sortie de gaz de cathode (40) ;
une chambre anodique (27) comprenant une anode faisant partie d'une paroi interne du logement tubulaire (31) comprenant un métal M¹, et une sortie de gaz d'anode (41) ; et
un diviseur (20, 21) séparant la chambre cathodique (25) de la chambre anodique (26) ; dans lequel le diviseur (20, 21) est électriquement isolé des circuits de l'anode et de la cathode.

13. Utilisation d'un alliage de cuivre comprenant > 60 % en poids de cuivre (Cu) et du plomb (Pb) comme cathode (30) dans un appareil à cellule électrochimique à logement tubulaire divisé pour générer du germane afin d'augmenter le rendement en courant et/ou afin d'inhiber la formation de dépôts de germanium.

14. Utilisation de KOH ayant une concentration située dans la plage allant de 80 à 170 g/l dans une solution aqueuse d'électrolyte comprenant également du dioxyde de germanium (GeO₂) afin d'améliorer le rendement en courant lors d'un redémarrage après un arrêt dans la génération de germane dans une cellule électrochimique à logement tubulaire divisé selon la revendication 12.
